# EUROPEAN PATENT SPECIFICATION

(11) **EP 3 584 231 B1**
(45) Date of publication and mention of the grant of the patent: **14.05.2025**
(21) Application number: 17908035.3
(22) Date of filing: 10.11.2017
(51) Int. Cl.: C03C 27/10, E06B 3/663, E06B 3/673, B23K 1/00, B23K 1/002, B23K 1/19, E06B 3/66, B23K 103/00

(54) **VACUUM GLASS PRODUCT**
VAKUUMGLASPRODUKT
PRODUIT EN VERRE SOUS VIDE

(30) Priority: 26.04.2017 CN 201710282659; 27.07.2017 CN 201720920604 U
(43) Date of publication of application: 25.12.2019
(73) Proprietor: Luoyang Landglass Technology Co., Ltd., Henan 471000 (CN)
(72) Inventor: LI, Yanbing, Luoyang Henan 471000 (CN); WANG, Zhangsheng, Luoyang Henan 471000 (CN)
(74) Representative: Grünecker Patent- und Rechtsanwälte PartG mbB
(86) International application number: PCT/CN2017/110309
(87) International publication number: WO 2018/196334

(56) References cited:
- WO-A1-2016/130854
- CN-A- 102 452 801
- CN-A- 104 478 202
- CN-A- 105 906 222

## Description

### BACKGROUND

### Technical Field

The present invention relates to the technical field of vacuum insulated glass, and in particular to a vacuum insulated glass product, see claim 1.

### Related Art

Vacuum insulated glass is an emerging category of glass, and is generally composed of two pieces of glass between which is a vacuum layer. Due to the existence of this vacuum layer, vacuum insulated glass has good performance in sound insulation, heat insulation and condensation resistance, and is more in line with the national development requirements for energy conservation and environmental protection.

The sealing quality of vacuum insulated glass directly affects the performance of vacuum insulated glass. At present, the sealing of vacuum insulated glass mainly adopts two methods: one is sealing with low-melting-point glass powder, and the other is sealing with metal.

A method for sealing with a low-melting-point glass material is know e.g. from CN 104478202 A. However, the durability is still need to be improved.

When the metal is used for sealing, a metal-allowy solder layer may be firstly prepared at the edge portions of the opposite surfaces of the two glass substrates, and then a soldering process is used to firmly connect the solder layers, thereby achieving airtight sealing of the two glass substrates.

A such method is known e.g. from WO 2016/130854 A1 (describing the preamble of claim 1).

### SUMMARY

In view of the problems in the prior art, a vacuum insulated glass product according to the present invention is defined in claim 1, to increase the welding strength

Further, the two metal layers and the intermediate solder layer are matched in width.

Further, the first glass substrate or the second glass substrate is provided with an extraction opening.

Further, a gas adsorbent for absorbing residual gas is disposed in the vacuum cavity.

According to the present invention, a width of a straight segment of the metal layer is d, an arc radius of an inner edge of the metal layer in the corner area is r, and an arc radius of an outer edge of the metal layer in the corner area is R, where d=R-r.

Further, the width of the straight segment of the metal layer is 8 mm, the arc radius of the inner edge of the metal layer in the corner area is 3 mm, and the arc radius of the outer edge of the metal layer in the corner area is 11 mm.

By changing the shape of the sealing structure at the corner areas of the glass substrates, i.e., replacing break corners with arc-shaped transition, the time for repeatedly heating internal corner parts of a welding strip is reduced during induction welding and heating of the welding strip at the corner areas is more uniform, so that a glass product with better sealing effect is obtained.

### BRIEF DESCRIPTION OF THE DRAWINGS

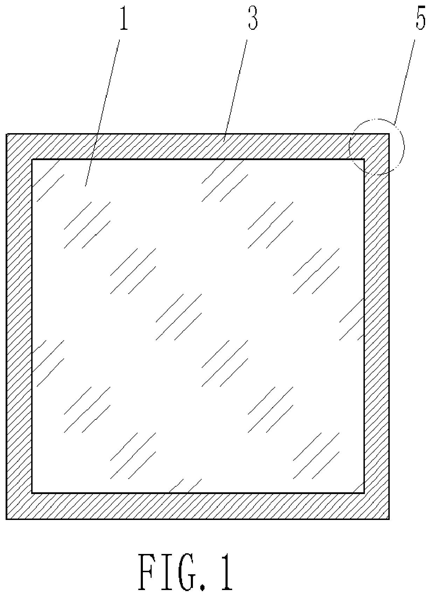

FIG. 1 is a schematic view of a welding strip of vacuum insulated glass in the prior art;
FIG. 2 is a structural schematic view of rectangular vacuum insulated glass;
FIG. 3 is an edge sealing structure view of a vacuum insulated glass product; and
FIG. 4 is a structural schematic view of triangular vacuum insulated glass.

In the figures: 1 glass substrate, 2 support, 3 metal layer, 4 arc-shaped transition structure, 5 corner area, 6 first glass substrate, 7 first metal layer, 8 intermediate solder layer, 9 second metal layer, 10 second glass substrate, 11 vacuum cavity, 12 sealing structure.

### DETAILED DESCRIPTION

The present invention is described below in a more comprehensive manner through embodiments. The present invention may be embodied in various forms, and should not be construed as being limited to the exemplary embodiments described herein, but being limited by the appended claims.

For ease of description, spatially relative terms such as "above", "below", "left", and "right" may be used herein to describe a relationship between one element or feature shown in the figure and another element or feature. It should be understood that such spatially relative terms are intended to encompass different orientations of the device in addition to the orientation depicted in the figures. For example, if the device in the figure is turned over, an element or feature described as being "below" another element or feature will then be "above" the other element or feature. Therefore, the exemplary term "below" may encompasses both the above and below orientations. The device may also be oriented in other ways (for example, rotated 90 degrees or at other orientations), and the spatially relative terms used herein are to be interpreted accordingly.

### Embodiment 1

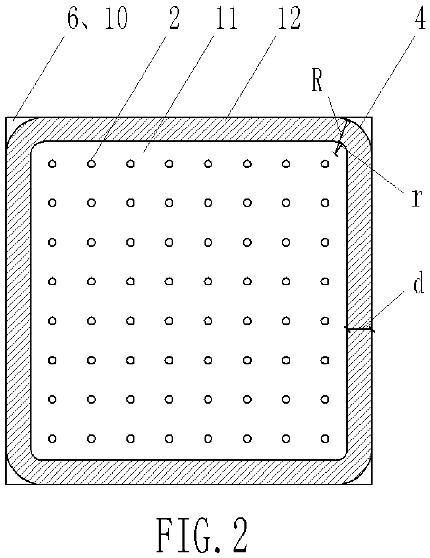

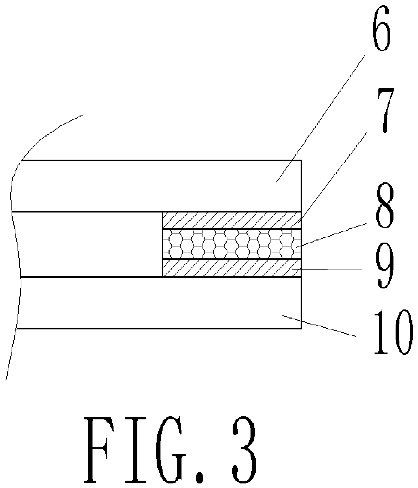

As shown in FIG. 2 and FIG. 3, the vacuum insulated glass product of this embodiment comprises: a first glass substrate 6 and a second glass substrate 10 each having a rectangular surface. The first glass substrate 6 and the second glass substrate 10 are superposed up and down, and the first glass substrate 6 or the second glass substrate 10 is provided with an extraction opening. A sealing structure is provided between the first glass substrate 6 and the second glass substrate 10. The sealing structure is disposed adjacent to edges of the first glass substrate 6 and the second glass substrate 10. The sealing structure 12 is used for airtight binding of the first glass substrate 6 and the second glass substrate 10 to form a vacuum cavity 11. A gas adsorbent and a plurality of supports 2 are distributed and provided inside the vacuum cavity 11. The gas adsorbent is used for absorbing residual gas, and the supports 2 are used for bearing pressure from the first glass substrate 6 and the second glass substrate 10.

The sealing structure 12 specifically comprises: a first metal layer 7, an intermediate solder layer 8, and a second metal layer 9. The first metal layer 7, the second metal layer 9 and the intermediate solder layer 8 are matched in width. The first metal layer 7 is fixed on the lower surface of the first glass substrate 6 by a metal slurry by a sintering process, the second metal layer 9 is fixed on the upper surface of the second glass substrate 9 by a metal slurry by a sintering process, and the intermediate solder layer 8 is welded to the first metal layer 7 and the second metal layer 9 by a high-frequency induction head. The sealing structure 12 has arc-shaped transition structures 4 at the corners areas of the glass substrates.

According to the present invention, a width of a straight segment of the metal layer is d, an arc radius of an inner edge of the metal layer in the corner area is r, and an arc radius of an outer edge of the metal layer in the corner area is R, where d=R-r. For example, the width of the straight segment of the metal layer is 8 mm, the arc radius of the inner edge of the metal layer in the corner area is 3 mm, and the arc radius of the outer edge of the metal layer in the corner area is 11 mm.

### Embodiment 2

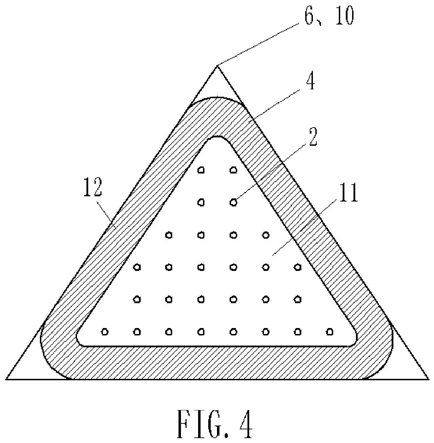

As shown in FIG. 3 and FIG. 4, the structure of this embodiment is substantially the same as that of Embodiment 1, except that the first glass substrate 6 and the second glass substrate 10 in this embodiment have triangular surfaces, and the finished glass product is triangular vacuum insulated glass.

## Claims

1. A vacuum insulated glass product, comprising:
a first glass substrate (6);
a second glass substrate (10) disposed opposite to the first glass substrate (6);
a sealing structure (12) provided between the first glass substrate (6) and the second glass substrate (10) and adjacent to edges of the first glass substrate (6) and the second glass substrate (10) and used for airtight binding of the first glass substrate (6) and the second glass substrate (10) to form a vacuum cavity (11); and
a support (2) provided inside the vacuum cavity (11) for bearing pressure from the first glass substrate (6) and the second glass substrate (10), **characterized in that**
the sealing structure (12) being disposed adjacent to the edges of the first glass substrate (6) and the second glass substrate (10) and comprises: metal layers (7, 9) which are fixedly bound to opposite surfaces of the first glass substrate (6) and the second glass substrate (10), respectively, and an intermediate solder layer (8) which connects the two metal layers (7, 9); and the metal layers (7, 9) have arc-shaped transition structures at the corners areas (5) of the glass substrates (6, 10), wherein a width of a straight segment of the metal layers (7, 9) is d, an arc radius of an inner edge of the metal layers (7, 9) in the corner area (5) is r, and an arc radius of an outer edge of the metal layers (7, 9) in the corner area (5) is R, wherein d=R-r,
wherein the metal layers (7, 9) are sintered on the first glass substrate (6) and the second glass substrate (10) by a metal slurry, respectively.

2. The vacuum insulated glass product according to claim 1, wherein the two metal layers (7, 9) and the intermediate solder layer (8) are matched in width.

3. The vacuum insulated glass product according to claim 1, wherein the first glass substrate (6) or the second glass substrate (10) is provided with an extraction opening.

4. The vacuum insulated glass product according to claim 1, wherein a gas adsorbent for absorbing residual gas is disposed in the vacuum cavity (11).

5. The vacuum insulated glass product according to claim 1, wherein the width of the straight segment of the metal layers (7, 9) is 8 mm, the arc radius of the inner edge of the metal layers (7, 9) in the corner area (5) is 3 mm, and the arc radius of the outer edge of the metal layers (7, 9) in the corner area is 11 mm.

## Patentansprüche

1. Vakuumisoliertes Glasprodukt, umfassend:
ein erstes Glassubstrat (6);
ein zweites Glassubstrat (10), das dem ersten Glassubstrat (6) gegenüber angeordnet ist;
eine Dichtungsstruktur (12), die zwischen dem ersten Glassubstrat (6) und dem zweiten Glassubstrat (10) und in der Nähe der Kanten des ersten Glassubstrats (6) und des zweiten Glassubstrats (10) bereitgestellt ist und zum luftdichten Verbinden des ersten Glassubstrats (6) und des zweiten Glassubstrats (10) verwendet wird, um einen Vakuumhohlraum (11) zu bilden; und
einen Träger (2), der innerhalb des Vakuumhohlraums (11) bereitgestellt ist, um den Druck von dem ersten Glassubstrat (6) und dem zweiten Glassubstrat (10) zu tragen, **dadurch gekennzeichnet, dass**
die Dichtungsstruktur (12) an die Kanten des ersten Glassubstrats (6) und des zweiten Glassubstrats (10) angrenzend angeordnet ist und umfasst: Metallschichten (7, 9), die fest mit gegenüberliegenden Oberflächen des ersten Glassubstrats (6) und des zweiten Glassubstrats (10) verbunden sind, und eine dazwischenliegende Lötschicht (8), die die beiden Metallschichten (7, 9) verbindet; und wobei die Metallschichten (7, 9) bogenförmige Übergangsstrukturen an den Eckbereichen (5) der Glassubstrate (6, 10) aufweisen, wobei eine Breite eines geraden Abschnitts der Metallschichten (7, 9) d ist, ein Bogenradius einer Innenkante der Metallschichten (7, 9) in dem Eckbereich (5) r ist und ein Bogenradius einer Außenkante der Metallschichten (7, 9) in dem Eckbereich (5) R ist, wobei d=R-r,
und dass die Metallschichten (7, 9) auf dem ersten Glassubstrat (6) und dem zweiten Glassubstrat (10) durch eine Metallaufschlämmung gesintert werden.

2. Vakuumisoliertes Glasprodukt nach Anspruch 1, wobei die beiden Metallschichten (7, 9) und die dazwischenliegende Lötschicht (8) in ihrer Breite aufeinander abgestimmt sind.

3. Vakuumisoliertes Glasprodukt nach Anspruch 1, wobei das erste Glassubstrat (6) oder das zweite Glassubstrat (10) mit einer Absaugöffnung bereitgestellt ist.

4. Vakuumisoliertes Glasprodukt nach Anspruch 1, wobei in dem Vakuumhohlraum (11) ein Gasadsorptionsmittel zur Absorption von restlichem Gas angeordnet ist.

5. Vakuumisolierglas nach Anspruch 1, wobei die Breite des geraden Abschnitts der Metallschichten (7, 9) 8 mm beträgt, der Bogenradius der Innenkante der Metallschichten (7, 9) im Eckbereich (5) 3 mm beträgt und der Bogenradius der Außenkante der Metallschichten (7, 9) im Eckbereich (5) 11 mm beträgt.

## Revendications

1. Produit en verre isolé sous vide, comprenant :
un premier substrat en verre (6) ;
un second substrat en verre (10) disposé de manière opposée au premier substrat en verre (6) ;
une structure d'étanchéité (12) agencée entre le premier substrat en verre (6) et le second substrat en verre (10) et adjacente à des bords du premier substrat en verre (6) et du second substrat en verre (10) et utilisée pour une liaison étanche à l'air du premier substrat en verre (6) et du second substrat en verre (10) pour former une cavité sous vide (11) ; et
un support (2) agencé à l'intérieur de la cavité sous vide (11) pour prendre en charge la pression provenant du premier substrat en verre (6) et du second substrat en verre (10), **caractérisé en ce que**
la structure d'étanchéité (12) est disposée à proximité adjacente des bords du premier substrat en verre (6) et du second substrat en verre (10) et comprend : des couches métalliques (7, 9) qui sont liées de manière fixe à des surfaces opposées du premier substrat en verre (6) et du second substrat en verre (10), respectivement, et une couche de soudure intermédiaire (8) qui relie les deux couches métalliques (7, 9) ; et
les couches métalliques (7, 9) ont des structures de transition en forme d'arc au niveau des zones de coins (5) des substrats en verre (6, 10), dans lequel une largeur d'un segment rectiligne des couches métalliques (7, 9) est d, un rayon d'arc d'un bord intérieur des couches métalliques (7, 9) dans la zone de coin (5) est r, et un rayon d'arc d'un bord extérieur des couches métalliques (7, 9) dans la zone de coin (5) est R, où d=R-r,
dans lequel les couches métalliques (7, 9) sont frittées sur le premier substrat en verre (6) et le second substrat en verre (10) par une suspension métallique, respectivement.

2. Produit en verre isolé sous vide selon la revendication 1, dans lequel les deux couches métalliques (7, 9) et la couche de soudure intermédiaire (8) correspondent en termes de largeur.

3. Produit en verre isolé sous vide selon la revendication 1, dans lequel le premier substrat en verre (6) ou le second substrat en verre (10) est pourvu d'une ouverture d'extraction.

4. Produit en verre isolé sous vide selon la revendication 1, dans lequel un adsorbant de gaz pour absorber un gaz résiduel est disposé dans la cavité sous vide (11).

5. Produit en verre isolé sous vide selon la revendication 1, dans lequel la largeur du segment rectiligne des couches métalliques (7, 9) est de 8 mm, le rayon d'arc du bord intérieur des couches métalliques (7, 9) dans la zone de coin (5) est de 3 mm, et le rayon d'arc du bord extérieur des couches métalliques (7, 9) dans la zone de coin est de 11 mm.
